**Europäisches Patentamt**

**European Patent Office**

**Office européen des brevets**

(19)

(11) Numéro de publication: **0 128 106**

**B1**

(12) **FASCICULE DE BREVET EUROPEEN**

(45) Date de publication du fascicule du brevet: **28.11.90**

(51) Int. Cl.⁵: **C 12 P 7/06, C 12 G 1/02**

(21) Numéro de dépôt: **84450015.7**

(22) Date de dépôt: **30.05.84**

(54) **Procédé de stimulation de la fermentation alcoolique d'un substratum.**

(30) Priorité: **01.06.83 FR 8309215**

(43) Date de publication de la demande:
**12.12.84 Bulletin 84/50**

(45) Mention de la délivrance du brevet:
**28.11.90 Bulletin 90/48**

(84) Etats contractants désignés:
**AT BE CH DE FR GB IT LI LU NL SE**

(56) Documents cités:
**FR-A- 890 917       GB-A- 377 243
FR-A-2 372 228       US-A-1 995 275
FR-A-2 398 112**

**CHEMICAL ABSTRACTS, vol. 89, no. 5, 31 juillet 1978, page 426, résumé no. 40876j, Columbus, Ohio, US**

**CHEMICAL ABSTRACTS, vol. 78, no. 5, 5 février 1973, page 358, résumé no. 27863f, Columbus, Ohio, US; R.G. GOGOBERIDZE et al.: "Use of yeast autolyzates during preparation of Georgian white table wines"**

(73) Titulaire: **UNIVERSITE DE BORDEAUX II
146, rue Léo Saignat
F-33000 Bordeaux (FR)**

(72) Inventeur: **Geneix, Catherine
5 allée des Roches Roses
F-77300 Fontainebleau (FR)**
Inventeur: **Lafon-Lafourcade, Suzanne
15 cours de la Somme
F-33000 Bordeaux (FR)**
Inventeur: **Ribereau-Gayon, Pascal
1 place Jean Jaurès
F-33000 Bordeaux (FR)**

(74) Mandataire: **Thébault, Jean-Louis
Cabinet Thébault S.A. 50 Cours de Verdun
F-33000 Bordeaux (FR)**

(56) Documents cités:
**CONNAISSANCE VIGNE VIN, vol. 17, no. 3, 1983, pages 205-217; C. GENEIX et al.: "Les causes, la prévention et le traitement des arrêts de la fermentation alcoolique"**

EP 0 128 106 B1

**Description**

La présente invention concerne la stimulation de la fermentation alcoolique d'un substratum et s'applique tout particulièrement à la vinification, et c'est dans le cadre de cette application que sera décrite en détail le procédé de l'invention, mais, d'une manière générale, à toute fermentation alcoolique d'un substratum destiné à la confection d'une boisson.

En vinification traditionnelle, on observe assez souvent des arrêts spontanés de la fermentation avant la transformation totale du sucre, ce qui peut entraîner parfois la perte de la récolte.

De même, en vinification des vins mousseux on observe quelquefois des difficultés pour induire la deuxième fermentation (prise de mousse).

Le but de l'invention est d'éviter ces difficultés en proposant un moyen capable non seulement d'éviter l'arrêt de fermentation mais encore, en cas d'arrêt spontané, de faciliter le départ de la deuxième fermentation.

A cet effet, l'invention a pour objet un procédé de stimulation de la fermentation alcoolique d'un substratum, caractérisé en ce qu'il consiste à faire adsorber des substances toxiques pour les levures , endogènes, notamment certains acides gras et leurs esters éthyliques et éventuellement exogènes, notamment des résidus pesticides et des substances secrétées par d'autres microorganismes développés précédemment, par addition audit substratum d'enveloppes cellulaires d'au moins un microorganisme gram$^+$ ou une levure.

D'une manière générale, l'adsorption desdits acides gras, en particulier des acides octanoïque et décanoïque, et de leurs esters, permet d'augmenter la résistance des levures aux milieux alcoolisés, en conséquence, d'éviter l'arrêt de fermentation, et, en cas d'arrêt spontané de la fermentation de lever en grande partie l'inhibition des levures et de faciliter, par là, le départ de la deuxième fermentation.

Les modalités de mise en oeuvre des enveloppes cellulaires varient bien entendu selon les applications et les types de moûts à traiter comme on le verra dans la description détaillée qui va suivre du procédé de l'invention dans son application à la vinification et de divers essais réalisés à l'occasion de sa mise au point, description donnée à titre d'exemple uniquement et en regard des dessins annexés sur lesquels:

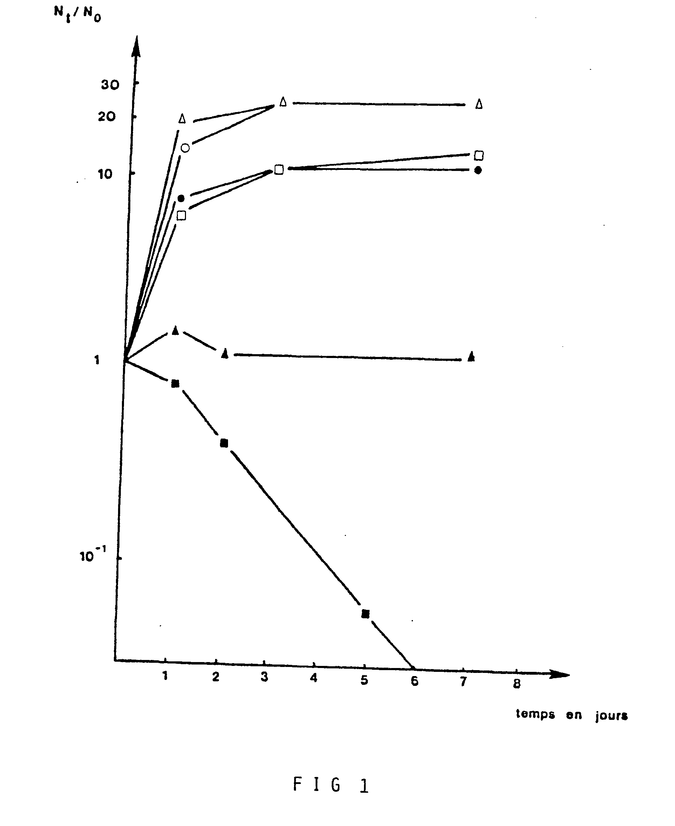

— Les figures 1 à 3 illustrent des résultats d'études d'évolution des populations de levures "Saccharomyces cerevisiae", inoculées en phase de prolifération dans différents milieux;

— Le tableau II illustre l'adsorption par des écorces de levure des acides octanoïque et décanoïque et de leurs esters correspondants;

— Le tableau III illustre la stimulation de la fermentation alcoolique par addition au moût d'écorces de levures;

— Le tableau IV illustre la stimulation de la fermentation alcoolique par addition au moût d'écorces de levures à la température de 20°C;

— Le tableau V illustre l'incidence de l'addition au moût d'écorces de levures sur la composition du vin en esters et acides gras;

— Le tableau VI illustre la prévention des arrêts de fermentation par chauffage;

— Le tableau VII illustre la stimulation de la fermentation alcoolique par addition au moût d'écorces de levures humides;

— Le tableau VIII illustre la stimulation de la deuxième fermentation après arrêt spontané de la fermentation alcoolique par addition au milieu d'écorces sèches de levures.

— Le tableau IX illustre la stimulation de la fermentation en présence de résidus de pesticides et de substances secrétées par d'autres microorganismes développés précédemment, et

— Le tableau X illustre la stimulation de la fermentation par addition au moût d'écores de bactéries lactiques.

Dans toute la présente description on utilisera indifféremment les expressions "écorces de levure" ou "enveloppes cellulaires" étant entendu qu'on entend par là ce qui reste des cellules après ébullition ou autolyse puis lavage.

On va tout d'abord en se référent aux figures 1 à 3, rappeler les fondements scientifiques ayant conduit à la mise au point dudit procédé.

Au cours de la fermentation alcoolique de moûts de raisins des levures sont progressivement inhibées dans leur croissance et leur métabolisme. Ceci se traduit par l'arrêt spontané de la fermentation avant l'épuisement du milieu en sucre.

Des expérimentations ont montré que cet arrêt n'est pas dû à des carences nutritionnelles (or, les seuls traitements préconisés jusqu'ici tendaient à enrichir le milieu nutritionnellement) mais à des substances toxiques libérées par la levure elle-même.

Sur les figures 1 à 3, des dessins annexés, on a reporté les résultats d'étude d'évolution des populations de levures "Saccharomyces cerevisiae" inoculées en phase de prolifération dans différents milieux.

La levure expérimentée est une souche de "Saccharomyces cerevisiae", levure sèche active.

On est parti d'un milieu de base, de pH égal à 3,5 et contenant par litre: saccharose: 200 g; acide D-L malique: 6 g; acide tartrique: 3 g; asparagine: 2 g; sulfate d'ammonium: 2 g; sulfate de potassium: 2 g; acide citrique: 0,3 g; sulfate de magnésium: 0,2 g; sulfate de manganèse: 0,01 g; solution de vitamines: 10 ml.

A partir de cette base, on a réalisé différents milieux par adjonction aux milieux témoins I, II, III (voir

2

plus loin) d'un mélange d'alcools supérieurs (par litre: propanol-1: 30 mg; méthanol: 100 mg; méthyl-2 propanol-1: 60 mg; phényl-2 éthanol: 100 mg; méthyl-3 butanol-1: 100 mg), d'acides gras (par litre: acide hexanoïque: 3 mg; acide octanoïque: 3 mg; acide décanoïque: 3 mg) et des esters d'éthanol correspondants (par litre: 20 mg) à partir de solutions mères hydroalcooliques. On a appliqué aux milieux divers traitements:

a) traitement à la bentonite: 700 mg de bentonite sont injectés dans les milieux; après 1 heure de contact, l'abondant floculat formé est éliminé par centrifugation (10.000 tours/mn pendant 5 mn);

b) traitement au charbon: 2 g de charbon sont mis en suspension dans les milieux; après 1 heure de contact on centrifuge (10.000 tours/mn pendant 5 min); on recueille le surnageant;

c) chauffage: des erlens de 250 ml remplis de milieux et bouchés hermétiquement sont chauffés au bain-marie pendant des durées déterminées. Après refroidissement, on a vérifié par dosage le titre alcoométrique des milieux.

Les milieux ont été stérilisés par filtration sur membrane de 0,45 µm répartis en flacons stériles, bouchés d'un dispositif qui assure une semi-aréobiose.

Les milieux préfermentés I, II et III (figure 1) sont obtenus en interrompant la fermentation du milieu de base par élimination des levures au moyen d'une double centrifugation, aux phases de prolifération stationnaire et de déclin du cycle de croissance de la population de "Sacch. cerevisiae".

Les milieux témoins correspondants (o, Δ, □) sont composés du milieu de base, adjusté aux teneurs en sucre et en éthanol des milieux préfermentés (I, II, III).

Sur la figure 1, la courbe o est relative à un milieu témoin non fermenté I comprenant, entre autres, 1,7% en volume d'éthanol et 160 g/l de saccharose.

La courbe ● est relative à un milieu préfermenté I comprenant, entre autres, 1,7% en volume d'éthanol et 160 g/l d'hexoses.

La courbe Δ est relative à un milieu témoin non fermenté II comprenant, entre autres, 7% en volume d'éthanol et 65 g/l d'hexoses.

La courbe ▲ est relative à un milieu préfermenté II comprenant, entre autres, 7% en volume d'éthanol et 65 g/l d'hexoses.

La courbe □ est relative à un milieu préfermenté III comprenant, entre autres, 9,5% en volume d'éthanol et 23 g/l de saccharose.

La courbe ■ est relative à un milieu préfermenté III comprenant, entre autres, 9,5% en volume d'éthanol et 23 g/l d'hexoses.

En ordonnée est porté le rapport entre le nombre $N_t$ de cellules par ml à l'instant t et le nombre $N_o$ de cellules par ml à l'origine, soit environ $10^7$ en l'occurence.

Les populations servant à l'inoculation ont été précultivées dans le milieu de base pendant 24 h à 25°C et recueillies par centrifugation.

Les populations viables sont dénombrées par les colonies formées en milieu nutritif solide constitué d'une solution gélosée à 20 g/l et de moût de raisin (170 g/l de sucre, pH 3,2), dilué au demi. Le sucre est dosé par méthode enzymatique.

Dans chacun des milieux témoins (o, Δ, □) on observe une augmentation des populations viables plus ou moins importante selon la teneur en éthanol. Dans les milieux préfermentés I et II également, on note le même phénomène mais les croissances totales sont respectivement deux fois et vingt cinq fois moins fortes que dans leurs témoins respectifs. Par contre, dans le milieu préfermenté III, toute multiplication est interdite; la population régresse de $10^7$ à $10^5$ cellules par ml en 7 jours.

Dans les trois milieux témoins la totalité du sucre est dégradée au 7ème jour; il reste 7 à 10 g/l de sucre dans les milieux préfermentés. Ces résultats montrent clairement que, parmi les produits formés par les levures, l'éthanol n'est pas le seul facteur inhibiteur.

Dans les conditions de l'experimentation, les carences nutritionnelles ne sont pas responsables des phénomènes d'inhibition.

En effet, si l'on ajoute aux milieux préfermentés II et III 10 ml d'une solution de vitamines B comprenant par litre: 4 µg de biotine; 500 mg de mesoinositol: 100 mg de thiamine, pyridoxine, acide nicotinique, acide pantothénique, acide paraaminobenzoïque, il ne se produit aucun effet.

De même, l'adjonction auxdits milieux d'un mélange d'activateurs (par litre: 1 g de sulfate d'ammonium; 0,1 g de sulfate de magnésium; 0,01 g de sulfate de manganèse) est sans effet.

En conséquence, on peut penser que les phénomènes d'inhibition sont induits par la formation, au cours de la fermentation, de substances toxiques pour la levure.

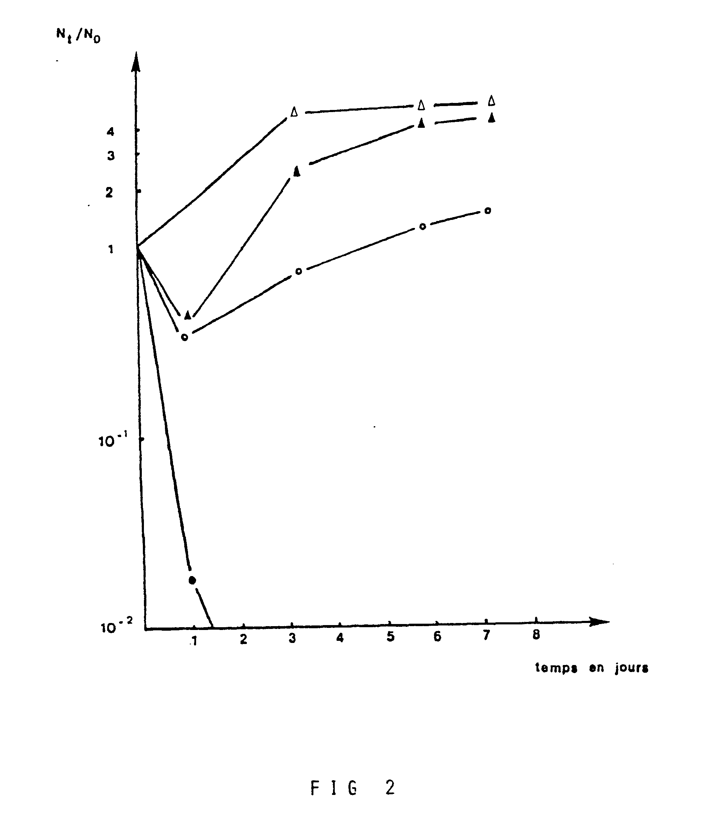

Dans une autre série d'essais, on a tenté de détruire ces substances par chauffage à 65°C pendant 15 minutes; ce traitement demeure sans effet. Il ne s'agit donc pas de substance de nature protéique. On a essayé également la fixation sur bentonite ou sur charbon. Le premier traitement est inefficace. Par contre, le second appliqué au milieu préfermenté III (Figure 2) autorise une croissance totale de $6,7 \times 10^6$ cellules par ml; 25 g de sucre sont fermentés respectivement en 6 et 8 jours dans le milieu témoin III et le milieu préfermenté III traité au charbon; il faut 20 jours pour obtenir ce même résultat dans le milieu préfermenté III non traité.

Sur la figure 2 on a représenté:

— en ● la courbe d'évolution pour un milieu préfermenté III (avec 10,5% en volume d'éthanol et 25 g/l d'hexoses);

3

— en o la courbe d'évolution pour un milieu préfermenté III traité au charbon à 2 g/l;

— en ▲ la courbe d'évolution pour un milieu témoin non fermenté III (avec 10,5% en volume d'éthanol et 25 g/l de saccharose;

— en Δ la courbe d'évolution pour un milieu témoin non fermenté III traité au charbon.

Les substances inhibitrices doivent donc être pour l'essentiel de poids moléculaire relativement faible puisque non adsorbées par la bentonite, mais en partie éliminées par le charbon.

On a essayé d'identifier ces substances parmi les produits secondaires du métabolisme levurien: alcools supérieurs, esters, acides gras.

La croissance totale est peu modifiée par l'addition d'alcools supérieurs; elle est sensiblement diminuée par celle des esters et du mélange esters/alcools supérieurs. Après 7 jours d'incubation, la fermentation alcoolique est complète dans les milieux témoins et additionnés des alcools supérieurs; on dose respectivement 8 et 12,5 g/l de sucre résiduel dans les milieux témoins additionnés d'esters et du mélange alcools supérieurs et esters.

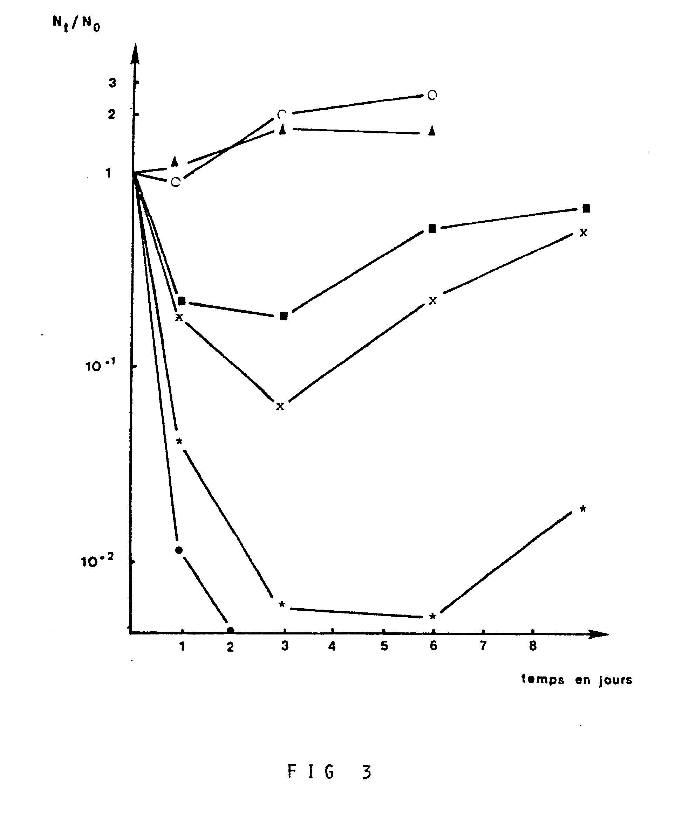

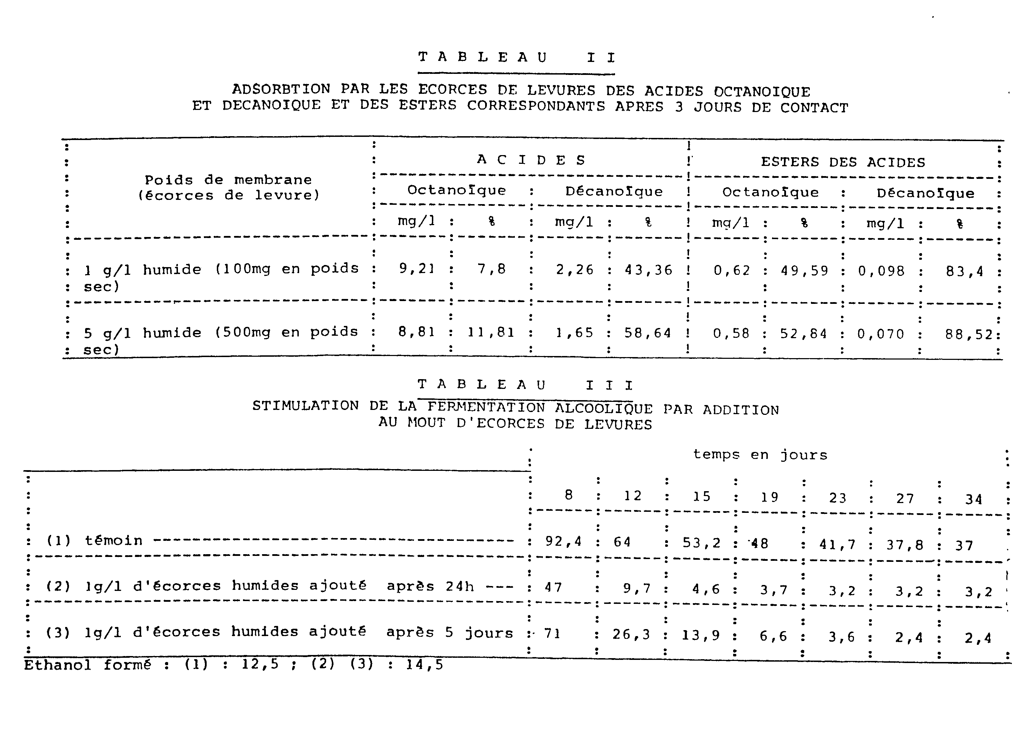

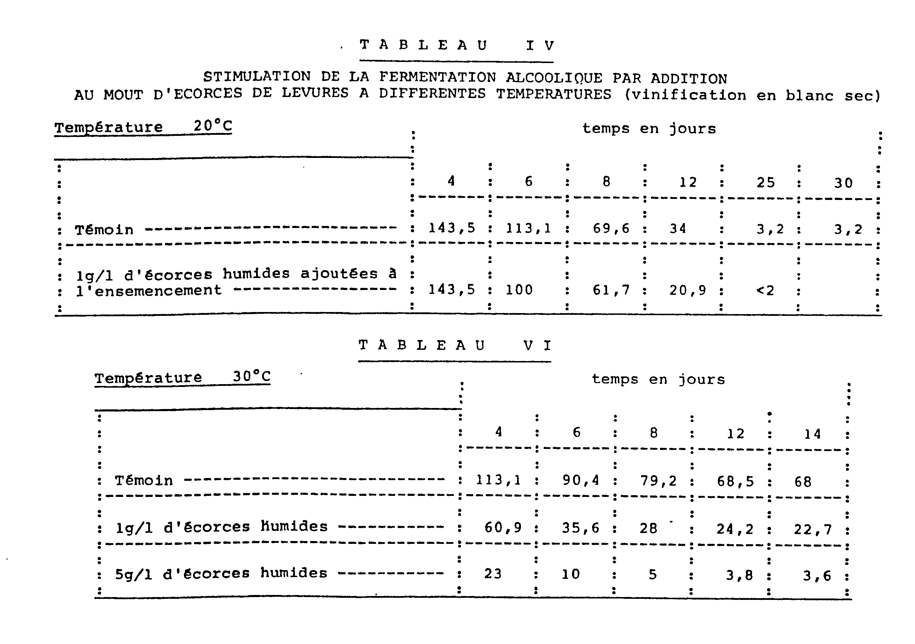

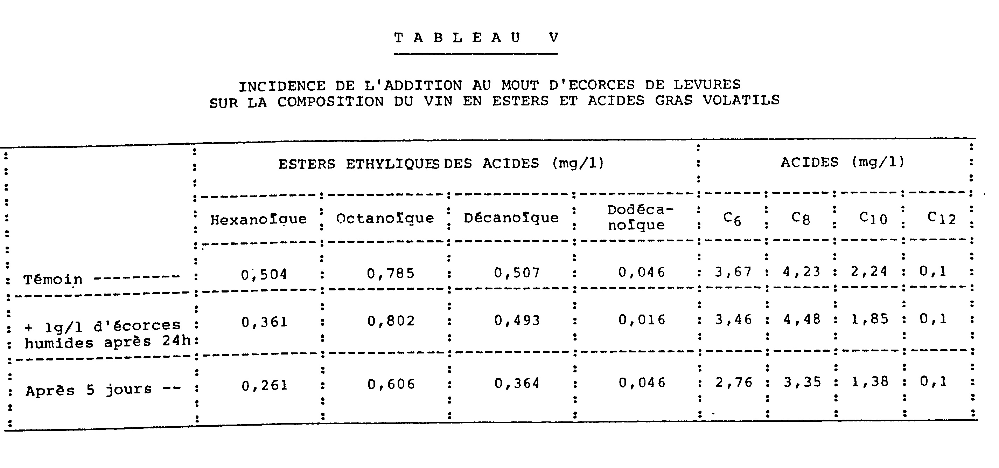

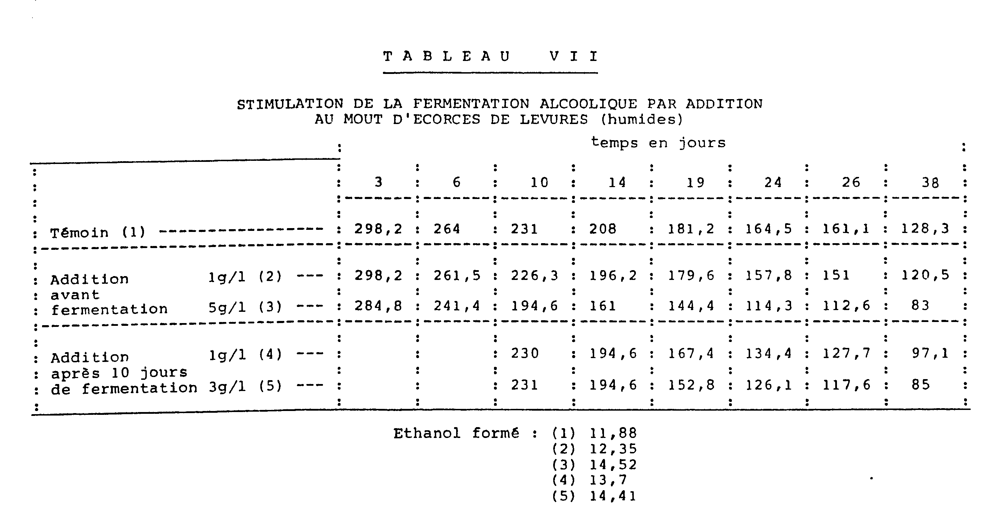

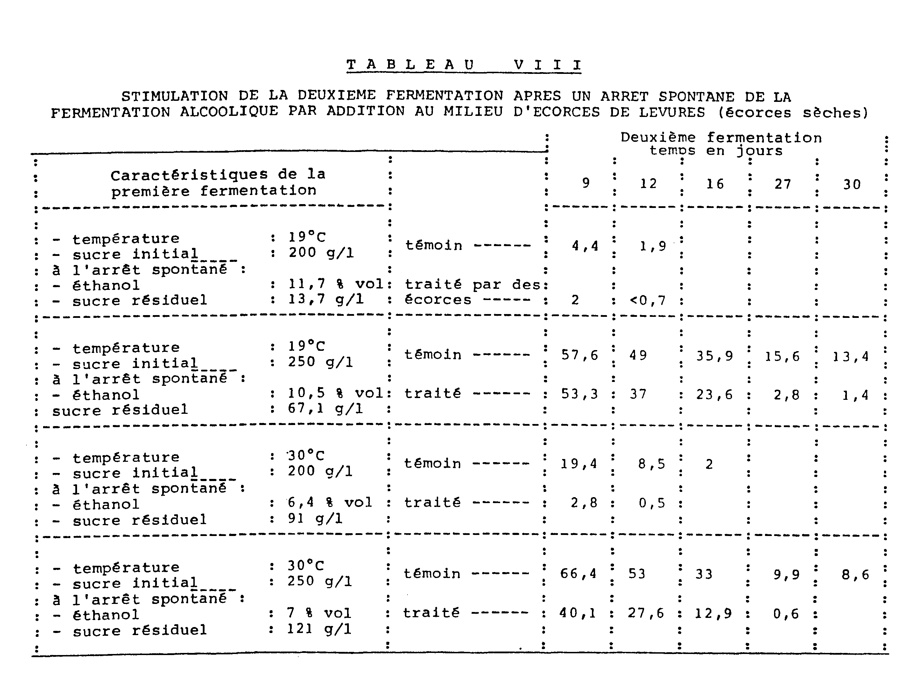

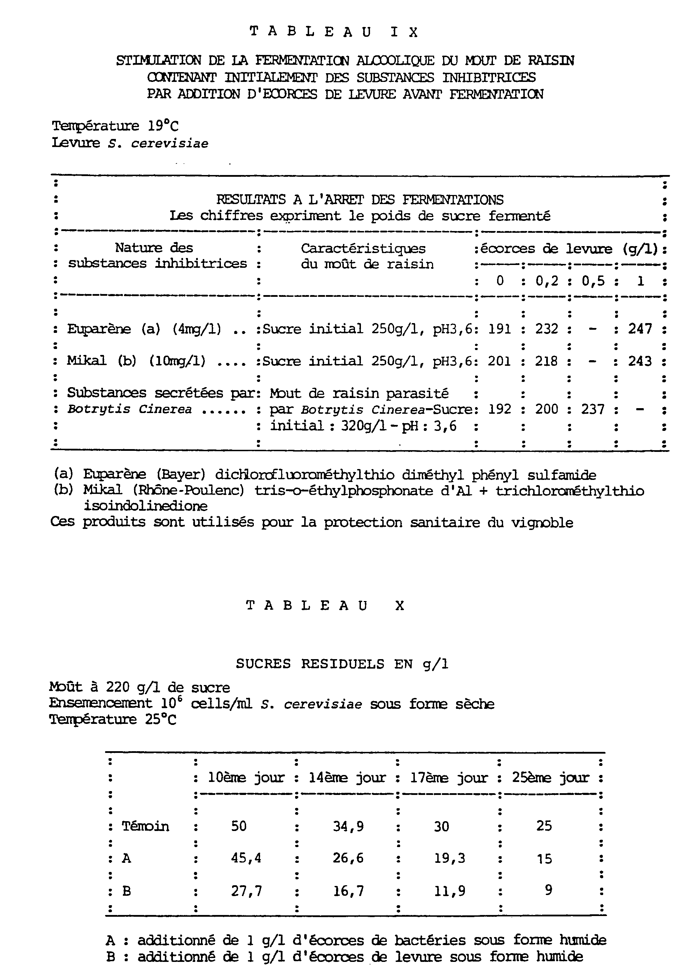

Mais surtout, l'action des trois acides gras (acides hexanoïque, octanoïque et décanoïque) aux doses existant dans les vins (3 mg/l) est particulièrement significative. Ces acides entraînent une mortalité rapide et considérable des populations de "Sacch.cerevisiae" comme illustré par la figure 3.

Sur cette figure 3, la courbe o est relative à un milieu témoin non fermenté III (9,25% en volume d'éthanol et 26,5 g/l de saccharose).

La courbe ▲ est relative à un milieu témoin III additionné d'alcools supérieurs.

La courbe ■ est relative à un témoin III additionné d'esters.

La courbe x est relative à un témoin III additionné d'esters et d'alcools supérieurs.

La courbe * est relative à un témoin III additionné d'acides gras et la courbe o est relative à un milieu préfermenté III à 9,25% en volume d'éthanol et 26,5 g/l d'hexoses.

Comme on peut le constater sur la figure 3, les populations de "Sacch.cerevisiae" dans le milieu additionné d'acides gras (courbe *) régressent en 4 jours de $8 \times 10^6$ à $4 \times 10^4$ cellules par ml. La courbe de régression est très comparable à celles des populations dans le milieu préfermenté correspondant (courbe ●). On n'observe aucune croissance pendant un dizaine de jours. La dégradation du sucre est quasi totalement inhibée.

L'action inhibitrice des acides gras (en $C_6$, $C_8$ et $C_{10}$) varie selon le titre alcoométrique du milieu et l'état physiologique des populations. A titre d'exemple le tableau I ci-dessous illustre l'inhibition de la seconde fermentation par la présence d'acides gras dans les milieux alcoolisés selon l'état physiologique des levures d'inoculum (levures: "Sach.cerevisiae"; inoculum: $10^6$ cells/ml).

TABLEAU I

Apres 15 jours d'incubation a 25°C

| MILIEU | | levures sèches actives | levures proliférantes | levures stationnaires |
|---|---|---|---|---|
| A<br>éthanol 11%<br>saccharose<br>20 g/l | cells/ml<br>sucre résiduel<br>(g/l) | $3 \times 10^6$<br><br>0,4 | $3,4 \times 10^3$<br><br>19,3 | $1,4 \times 10^7$<br><br>1,4 |
| A'même milieu que A+ acides gras<br>$C_6$: 7 mg/l<br>$C_8$: 10 mg/l<br>$C_{10}$: 3 mg/l | cells/ml<br><br>sucre résiduel<br>(g/l) | $3 \times 10^6$<br><br>0,4 | 0<br><br>19,6 | $3,6 \times 10^6$<br><br>2,8 |
| B<br>éthanol 13%<br>saccharose<br>10 g/l | cells/ml<br>sucre résiduel<br>(g/l) | $8,2 \times 10^5$<br><br>0,4 | 0<br><br>9,6 | $3,1 \times 10^2$<br><br>9,2 |
| B'même milieu que B+ acides gras<br>$C_6$: 7 mg/l<br>$C_8$: 10 mg/l<br>$C_1$: 3 mg/l | cells/ml<br><br>sucre résiduel<br>(g/l) | $1,3 \times 10^5$<br><br>9,5 | 0<br><br>9,6 | $10^2$<br><br>9,6 |

Les observations ci-dessus conduisent à penser que l'adsorption des acides gras en $C_6$, $C_8$ et $C_{10}$ doit suffire pour faciliter la croissance et la fermentation des levures en présence d'éthanol (figure 2, tableau I).

En effet, on a vérifié que le traitement au charbon du milieu témoin III additionné de 7, 10 et 3 mg/l des acides hexanoïque, octanoïque et décanoïque élimine respectivement 61,4%, 97,2% et 97% de ces acides. Par contre, la bentonite (autorisée) se revèle inefficace.

On a trouvé, conformément à la présente invention, qu'il était particulièrement intéressant d'opérer une telle adsorption à l'aide d'écorces de levure (ou enveloppes cellulaires) préparées par simple ébullition dans l'eau de levures sèches, ou après autolyse puis lavage à l'eau, par exemple "Sacch.cerevisiae".

Ces écorces, en effet, fixent une partie importante des esters éthyliques et des acides gras, de manière variable selon la quantité ajoutée et le temps de contact.

Le tableau II annexé illustre l'adsorption par les écorces de levures des acides octanoïque et décanoïque et des esters correspondants après trois jours de contact dans un milieu à 11% en volume d'éthanol et en teneurs initiales suivantes:

acide octanoïque: 10 mg/l

acide décanoïque: 4 mg/l

esters d'acide octanoïque: 1,5 mg/l

esters d'acide décanoïque: 0,8 mg/l

La levure utilisée est "Sacch.cerevisiae".

L'adsorption est très importante pour les esters d'acide décanoïque, un peu moins importante pour les esters d'acide octanoïque et pour l'acide décanoïque et faible pour l'acide octanoïque.

Il est à noter que le broyage des écorces de levure ou leur atomisation après autolyse augmente la surface d'adsorption et l'efficacité.

Les écorces de levure permettent la fermentation d'une plus grande quantité de sucre lorsqu'on les ajoute en début de fermentation ou pendant la phase stationnaire, au 5ème jour, comme illustré par les tableaux III et IV.

Le tableau III montre la stimulation de la fermentation par addition à un moût Listel (250 g/l de sucre; levure: "Sacch.cerevisiae"; inoculum: $10^6$ cells/ml; température 25°C) de 1 g/l d'écorces humides, d'une part, 24 h après le début de fermentation et, d'autre part, 5 jours après.

On constate le très nette diminution du sucre résiduel non fermenté au fil des jours suivant l'adjonction d'écorces par rapport au témoin non traité.

Le tableau IV illustre la stimulation de la fermentation par addition à un moût Listel (sucre: 200 g/l; levure: "Sacch.cerevisiae"; inoculum: $10^6$ cells/ml; température 20°C) d'écorces de levures à raison de 1 g/l d'écorces humides ajoutées au moment de l'ensemencement (cas d'une vinification en blanc sec).

La diminution du poids de sucre résiduel non fermenté au cours des jours suivants est, par rapport au témoin, moins nette qu'à 25°C (tableau III) mais néanmoins encore sensible.

A 30°C (tableau VI) la diminution du poids de sucre résiduel non fermenté est, par contre, plus accentuée et nettement plus accusée pour une addition de 5 g/l d'écorces humides que pour 1 g/l.

Une température de fermentation trop élevée (>30°C) est souvent la cause de l'arrêt de la fermentation; dans ce cas l'addition d'écorces est particulièrement efficace.

L'adjonction d'écorces de levure n'a pas d'effet sur les qualités organoleptiques des vins.

Le tableau V illustre cette particularité en montrant l'incidence de l'addition à un moût de raisin (sucre: 250 g/l; levure: "Sacch.cerevisiae"; inoculum: $10^6$ cells/ml; température: >25°C) d'écorces de levure sur la composition du vin en esters et acides gras.

Les différences de teneurs pour les acides en $C_6$, $C_8$ et $C_{10}$ et leurs esters correspondants, entre un témoin et deux milieux auxquels on a ajouté 1 g/l d'écorces humides respectivement après 24 h et après 5 jours du départ de la fermentation, ne sont pas significatives et n'ont pas de retentissement au plan organoleptique.

Il a également été observé que l'adjonction d'écorces de levure avait un effet de stimulation de la fermentation alcoolique en vinification en liquoreux dans le cas de moûts parasités par la moisissure "Botrytis cinerea".

Le tableau VII illustre une telle stimulation par addition d'écorces de levures humides dans un moût de raisin parasité par "Botrytis cinerea; (sucre initial: 330 g/l; levure: "Sacch.cerevisiae"; inoculum: $10^6$ cells/ml; température 22°C).

Les nombres indiqués dans ce tableau expriment le poids (g/l) de sucre résiduel non fermenté.

Enfin, l'adjonction d'écores de levures facilite la deuxième fermentation lors d'un arrêt spontané de la fermentation alcoolique par excès de sucre et par excès de température.

A cet effet, dès la constatation de l'arrêt de la fermentation on traite le vin aux écorces de levure, conformément à l'invention, puis, un à deux jours après ce traitement, on inocule en "Sacch.cerevisiae" à $10^6$ cells/ml de vin environ pour faire repartir la fermentation.

Le tableau VIII illustre à ce propos la stimulation de la deuxième fermentation après un arrêt spontané de la fermentation alcoolique par addition d'écorces sèches dans un moût Listel (levure: "Sacch.cerevisiae"; inoculum $10^6$ cells/ml). Ce moût fermenté est traité avec 500 mg d'écorces séchées; 24 heures après on ensemence avec $10^6$ cells/ml.

Dans le tableau VIII les nombres indiqués expriment le poids (g/l) de sucre résiduel non fermenté. La réduction de la teneur en sucre résiduel est manifeste pour les milieux traités par rapport aux témoins, quelles que soient les caractéristiques de la première fermentation.

D'une manière générale, dans le cas de la prévention des arrêts de fermentation on ajoute les écorces de levure de préférence au départ de la fermentation dans le moût clarifié dans la vinification en blanc et dans le moût sans clarification dans la vinification en rouge. Dans le cas du traitement (stimulation de la seconde fermentation), dans la vinification en rouge et en blanc, on écoule puis on ajoute au jus les écores. Après 24 h ou 48 h on réensemence.

Bien entendu l'invention n'est pas limitée aux exemples mentionnés ci-dessus mais couvre toutes les applications de telles écorces de levures (sèches ou humides) quels que soient leur dosage et leur fabrication.

Préférentiellement on utilise la levure "Sacch.cerevisiae" car c'est la levure majoritaire dans les moûts de raisin et qui a une action déterminante dans l'élaboration du vin. Mais on pourrait utiliser éventuellement d'autres levures.

On peut utiliser par ailleurs des levures mortes ou des écores de levures lavées provenant du sous-produit de la fabrication de l'autolysat de levures.

Il est également important de noter que l'addition desdites enveloppes cellulaires permet de faire adsorber, en outre, d'éventuelles substances toxiques pour les levures, exogènes, notamment des résidus pesticides et des substances secrétées par d'autres microorganismes développés précédemment. L'application qui vient d'être décrite ci-dessus au moût de raisin parasité par "Botrytis cinerea" illustre d'ailleurs cet autre effet de l'addition des enveloppes cellulaires. De même le tableau IX ci-annexé illustre la stimulation de la fermentation en présence de résidus de pesticides et de substances secrétées par d'autres microorganismes développés précédemment.

D'une manière générale on peut utiliser les enveloppes cellulaires de différentes microorganismes, d'une part, les levures, notamment "Sacch.cerevisiae" et, d'autre part, les microorganismes gram$^+$, en particulier les bactéries lactiques comme illustré par le tableau X annexé.

Les enveloppes cellulaires proviennent d'un seul type de microorganisme ou de plusieurs et sont alors mélangées.

On peut aussi ajouter à ces enveloppes cellulaires des cellules vivantes ou tout autre additif compatible.

Enfin, le procédé de l'invention s'applique d'une manière générale à la stimulation de la fermentation alcoolique de tout substrat, notamment de boissons telles que le vin, la bière, le saké etc...

## Revendications

1. Procédé de stimulation de la fermentation alcoolique d'un substratum, caractérisé en ce qu'il consiste à faire adsorber des substances toxiques pour les levures, endogènes, notamment certains acides gras et leurs esters éthyliques et éventuellement exogènes, notamment des résidus pesticides et des substances secrétées par d'autres microorganismes développés précédemment, par addition audit substratum d'enveloppes cellulaires d'au moins un microorganisme gram$^+$ ou une levure.

2. Procédé suivant la revendication 1, caractérisé en ce que les enveloppes cellulaires sont préparées par ébullition des microorganismes ou après autolyse.

3. Procédé suivant la revendication 1 ou 2, caractérisé en ce que les enveloppes cellulaires sont des enveloppes de levures "Sacch.cerevisiae" seules ou en mélange avec des enveloppes cellulaires d'autres microorganismes, à savoir des microorganismes gram$^+$ ou des levures.

4. Procédé suivant l'une des revendications 1 à 3, caractérisé en ce que les enveloppes cellulaires sont éventuellement mélangées avec des cellules vivantes.

5. Procédé suivant l'une des revendications 1 à 4, caractérisé en ce que la dose d'enveloppes cellulaires est en poids sec d'environ 100 mg à 500 mg par litre ou Kg de substratum.

6. Procédé suivant la revendication 5, caractérisé en ce que l'addition des enveloppes cellulaires est effectuée avant la départ de la fermentation.

7. Procédé suivant la revendication 5, caractérisé en ce que l'addition des enveloppes cellulaires est effecutée 24h après le départ de la fermentation.

8. Procédé suivant la revendication 5, caractérisé en ce que l'addition des enveloppes cellulaires est effectuée cinq à dix jours environ après le départ de la fermentation.

9. Procédé suivant l'une des revendications 1 à 4, appliqué à la stimulation de la deuxième fermentation d'un milieu préfermenté, caractérisé en ce que dès l'arrêt de la fermentation on ajoute audit milieu des écorces de levures puis, un à deux jours après, on inocule avec une nouvelle population le levures.

10. Procédé suivant l'une des revendications 1 à 4, plus particulièrement appliqué à la stimulation de la fermentation alcoolique d'un substratum parasité, notamment par "Botrytis cinerea", caractérisé en ce qu'il consiste à ajouter lesdites enveloppes cellulaires avant ou après le départ de la fermentation.

## Patentansprüche

1. Verfahren zur Förderung der alkoholischen Gärung eines Substrats, dadurch gekennzeichnet, daß es darin besteht, für die endogenen Hefen toxische Substanzen, insbesondere bestimmte Fettsäuren und ihre

# EP 0 128 106 B1

Ethyl- und gegebenenfalls exogenen Ester, insbesondere Pestizidrückstände und vorher entwickelte, von anderen Mikroorganismen abgeschiedene Substanzen durch Zusatz von zellularen Hüllen wenigstens eines Gram⁺-Mikroorganismus oder einer Hefe zum besagten Substrat zu absorbieren.

2. Verfahren nach Anspruch 1, dadurch gekennzeichnet, daß die zellularen Hüllen durch Kochen von Mikroorganismen oder nach Autolyse heregestellt sind.

3. Verfahren nach Anspruch 1 oder 2, dadurch gekennzeichnet, daß die zellularen Hüllen Hüllen von Hefen "Sacch. cerevisiae" alleine oder in Mischung mit zellularen Hüllen anderer Mikroorganismen, d.h. Gram⁺-Mikroorganismen oder Hefen sind.

4. Verfahren nach einem der Ansprüche 1 bis 3, dadurch gekennzeichnet, daß die zellularen Hüllen gegebenenfalls mit lebenden Zellen gemischt sind.

5. Verfahren nach einem der Ansprüche 1 bis 4, dadurch gekennzeichnet, daß die Dosis an zellularen Hüllen in Trockengewicht etwa 100 mg bis 500 mg pro Liter oder kg Substrat beträgt.

6. Verfahren nach Anspruch 5, dadurch gekennzeichnet, daß der Zusatz von zellularen Hüllen vor dem Beginn der Fermentation vorgenommen wird.

7. Verfahren nach Anspruch 5, dadurch gekennzeichnet, daß der Zusatz von zellularen Hüllen 24 h nach dem Beginn der Fermentation vorgenommen wird.

8. Verfahren nach Anspruch 5, dadurch gekennzeichnet, daß der Zusatz von zellularen Hüllen etwa 5 bis 10 Tage nach dem Beginn der Fermentation vorgenommen wird.

9. Verfahren nach einem der Ansprüche 1 bis 4, angewendet zur Förderung der zweiten Fermentation eines vorfermentierten Milieus, dadurch gekennzeichnet, daß nach dem Abbruch der Fermentation dem besagten Milieu Hefeschalen zugegeben werden und dann nach ein bis zwei Tagen mit einer neuen Hefepopulation geimpft wird.

10. Verfahren nach einem der Ansprüche 1 bis 4, vorzugsweise angewandt zur Förderung der alkoholischen Gärung eines insbesondere durch "Botrytis cinerea" befallenen Substrats, dadurch gekennzeichnet, daß es darin besteht, die besagten zellularen Hüllen vor oder nach dem Beginn der Gärung zuzugeben.

## Claims

1. Method for stimulating the fermentation of a biological substratum characterised in that it consists in causing the absorption of substances toxic to yeasts, endogens, particularly certain fatty acids and their ethyl esters and possibly exogens, particularly pesticide residues and substances secreted by other previously developed microorganisms, by the addition to said substratum of cell walls of at least one gram-positive micro-organism or a yeast.

2. Method according to claim 1, characterised in that the cell walls are prepared by boiling of the micro-organisms or by post autolysis.

3. Method according to claim 1 or 2, characterised in that the cell walls are yeast ghosts of "Sacch. cerevisiae" alone or mixed with cell walls of other micro-organisms, namely gram-positive micro-organisms or yeasts.

4. Method according to one of claims 1 or 3, characterised in that the cell walls are possibly mixed with living cells.

5. Method according to one of claims 1 or 4 characterised in that the quantity of cell walls is in dry weight about 100 mg to 500 mg per litre or kilo of substratum.

6. Method according to claim 5, characterised in that the addition of cell walls is made before the start of fermentation.

7. Method according to claim 5, characterised in that the addition of cell walls is made 24 hours before the start of fermentation.

8. Method according to claim 5, characterised in that the addition of cell walls is made five to ten days after the start of fermentation.

9. Method according to one of claims 1 to 4, used for the stimulation of the second fermentation of a pre-fermented substratum, characterised in that after stoppage of the fermentation yeast cell walls are added to the substratum and then one or two days afterwards, a new yeast population is also inoculated.

10. Method according to one of claims 1 to 4, more particularly used to stimulation of the alcoholic fermentation of a parasitised biological substratum, especially by "Botrytis cinerea", characterised in that it consists in adding said cell walls before or after the start of fermentation.

7

EP 0 128 106 B1

F I G 1

1

F I G   2

FIG 3

## TABLEAU II

ADSORBTION PAR LES ECORCES DE LEVURES DES ACIDES OCTANOIQUE
ET DECANOIQUE ET DES ESTERS CORRESPONDANTS APRES 3 JOURS DE CONTACT

| Poids de membrane (écorces de levure) | ACIDES | | | | ESTERS DES ACIDES | | | |
|---|---|---|---|---|---|---|---|---|
| | Octanoïque | | Décanoïque | | Octanoïque | | Décanoïque | |
| | mg/l | % | mg/l | % | mg/l | % | mg/l | % |
| 1 g/l humide (100mg en poids sec) | 9,21 | 7,8 | 2,26 | 43,36 | 0,62 | 49,59 | 0,098 | 83,4 |
| 5 g/l humide (500mg en poids sec) | 8,81 | 11,81 | 1,65 | 58,64 | 0,58 | 52,84 | 0,070 | 88,52 |

## TABLEAU III

STIMULATION DE LA FERMENTATION ALCOOLIQUE PAR ADDITION
AU MOUT D'ECORCES DE LEVURES

| | temps en jours | | | | | | |
|---|---|---|---|---|---|---|---|
| | 8 | 12 | 15 | 19 | 23 | 27 | 34 |
| (1) témoin | 92,4 | 64 | 53,2 | 48 | 41,7 | 37,8 | 37 |
| (2) 1g/l d'écorces humides ajouté après 24h | 47 | 9,7 | 4,6 | 3,7 | 3,2 | 3,2 | 3,2 |
| (3) 1g/l d'écorces humides ajouté après 5 jours | 71 | 26,3 | 13,9 | 6,6 | 3,6 | 2,4 | 2,4 |

Ethanol formé : (1) : 12,5 ; (2) (3) : 14,5

EP 0 128 106 B1

## T A B L E A U    I V

STIMULATION DE LA FERMENTATION ALCOOLIQUE PAR ADDITION
AU MOUT D'ECORCES DE LEVURES A DIFFERENTES TEMPERATURES (vinification en blanc sec)

**Température    20°C**　　　　　　　　　　temps en jours

| | 4 | 6 | 8 | 12 | 25 | 30 |
|---|---|---|---|---|---|---|
| Témoin | 143,5 | 113,1 | 69,6 | 34 | 3,2 | 3,2 |
| 1g/l d'écorces humides ajoutées à l'ensemencement | 143,5 | 100 | 61,7 | 20,9 | <2 | |

## T A B L E A U    V I

**Température    30°C**　　　　　　　　　　temps en jours

| | 4 | 6 | 8 | 12 | 14 |
|---|---|---|---|---|---|
| Témoin | 113,1 | 90,4 | 79,2 | 68,5 | 68 |
| 1g/l d'écorces humides | 60,9 | 35,6 | 28 | 24,2 | 22,7 |
| 5g/l d'écorces humides | 23 | 10 | 5 | 3,8 | 3,6 |

EP 0 128 106 B1

## T A B L E A U    V

### INCIDENCE DE L'ADDITION AU MOUT D'ECORCES DE LEVURES
### SUR LA COMPOSITION DU VIN EN ESTERS ET ACIDES GRAS VOLATILS

|  | ESTERS ETHYLIQUES DES ACIDES (mg/l) | | | | ACIDES (mg/l) | | | |
|---|---|---|---|---|---|---|---|---|
|  | Hexanoïque | Octanoïque | Décanoïque | Dodéca-noïque | $C_6$ | $C_8$ | $C_{10}$ | $C_{12}$ |
| Témoin --------- | 0,504 | 0,785 | 0,507 | 0,046 | 3,67 | 4,23 | 2,24 | 0,1 |
| + 1g/l d'écorces humides après 24h | 0,361 | 0,802 | 0,493 | 0,016 | 3,46 | 4,48 | 1,85 | 0,1 |
| Après 5 jours -- | 0,261 | 0,606 | 0,364 | 0,046 | 2,76 | 3,35 | 1,38 | 0,1 |

EP 0 128 106 B1

**T A B L E A U     V I I**

STIMULATION DE LA FERMENTATION ALCOOLIQUE PAR ADDITION
AU MOUT D'ECORCES DE LEVURES (humides)

| | | temps en jours | | | | | | | |
|---|---|---|---|---|---|---|---|---|---|
| | | 3 | 6 | 10 | 14 | 19 | 24 | 26 | 38 |
| Témoin (1) ------------------ | | 298,2 | 264 | 231 | 208 | 181,2 | 164,5 | 161,1 | 128,3 |
| Addition avant fermentation | 1g/l (2) --- | 298,2 | 261,5 | 226,3 | 196,2 | 179,6 | 157,8 | 151 | 120,5 |
| | 5g/l (3) --- | 284,8 | 241,4 | 194,6 | 161 | 144,4 | 114,3 | 112,6 | 83 |
| Addition après 10 jours de fermentation | 1g/l (4) --- | | | 230 | 194,6 | 167,4 | 134,4 | 127,7 | 97,1 |
| | 3g/l (5) --- | | | 231 | 194,6 | 152,8 | 126,1 | 117,6 | 85 |

Ethanol formé :  (1)  11,88
                 (2)  12,35
                 (3)  14,52
                 (4)  13,7
                 (5)  14,41

## T A B L E A U   V I I I

STIMULATION DE LA DEUXIEME FERMENTATION APRES UN ARRET SPONTANE DE LA
FERMENTATION ALCOOLIQUE PAR ADDITION AU MILIEU D'ECORCES DE LEVURES (écorces sèches)

| Caractéristiques de la première fermentation | | Deuxième fermentation temps en jours | | | | |
|---|---|---|---|---|---|---|
| | | 9 | 12 | 16 | 27 | 30 |
| - température : 19°C<br>- sucre initial : 200 g/l<br>à l'arrêt spontané : | témoin ------ | 4,4 | 1,9 | | | |
| - éthanol : 11,7 % vol<br>- sucre résiduel : 13,7 g/l | traité par des écorces ----- | 2 | <0,7 | | | |
| - température : 19°C<br>- sucre initial : 250 g/l<br>à l'arrêt spontané : | témoin ------ | 57,6 | 49 | 35,9 | 15,6 | 13,4 |
| - éthanol : 10,5 % vol<br>sucre résiduel : 67,1 g/l | traité ------ | 53,3 | 37 | 23,6 | 2,8 | 1,4 |
| - température : 30°C<br>- sucre initial : 200 g/l<br>à l'arrêt spontané : | témoin ------ | 19,4 | 8,5 | 2 | | |
| - éthanol : 6,4 % vol<br>- sucre résiduel : 91 g/l | traité ------ | 2,8 | 0,5 | | | |
| - température : 30°C<br>- sucre initial : 250 g/l<br>à l'arrêt spontané : | témoin ------ | 66,4 | 53 | 33 | 9,9 | 8,6 |
| - éthanol : 7 % vol<br>- sucre résiduel : 121 g/l | traité ------ | 40,1 | 27,6 | 12,9 | 0,6 | |

T A B L E A U   I X

STIMULATION DE LA FERMENTATION ALCOOLIQUE DU MOUT DE RAISIN
CONTENANT INITIALEMENT DES SUBSTANCES INHIBITRICES
PAR ADDITION D'ECORCES DE LEVURE AVANT FERMENTATION

Température 19°C
Levure *S. cerevisiae*

| | | RESULTATS A L'ARRET DES FERMENTATIONS<br>Les chiffres expriment le poids de sucre fermenté | | | |
|---|---|---|---|---|---|
| Nature des substances inhibitrices | Caractéristiques du moût de raisin | écorces de levure (g/l) | | | |
| | | 0 | 0,2 | 0,5 | 1 |
| Euparène (a) (4mg/l) .. | Sucre initial 250g/l, pH3,6 | 191 | 232 | – | 247 |
| Mikal (b) (10mg/l) .... | Sucre initial 250g/l, pH3,6 | 201 | 218 | – | 243 |
| Substances secrétées par *Botrytis Cinerea* ...... | Mout de raisin parasité par *Botrytis Cinerea*-Sucre initial : 320g/l – pH : 3,6 | 192 | 200 | 237 | – |

(a) Euparène (Bayer) dichlorofluorométhylthio diméthyl phényl sulfamide
(b) Mikal (Rhône-Poulenc) tris-o-éthylphosphonate d'Al + trichlorométhylthio
    isoindolinedione
Ces produits sont utilisés pour la protection sanitaire du vignoble

T A B L E A U   X

SUCRES RESIDUELS EN g/l

Moût à 220 g/l de sucre
Ensemencement $10^6$ cells/ml *S. cerevisiae* sous forme sèche
Température 25°C

| | 10ème jour | 14ème jour | 17ème jour | 25ème jour |
|---|---|---|---|---|
| Témoin | 50 | 34,9 | 30 | 25 |
| A | 45,4 | 26,6 | 19,3 | 15 |
| B | 27,7 | 16,7 | 11,9 | 9 |

A : additionné de 1 g/l d'écorces de bactéries sous forme humide
B : additionné de 1 g/l d'écorces de levure sous forme humide